# EUROPEAN PATENT SPECIFICATION

(11) **EP 1 963 005 B1**
(45) Date of publication and mention of the grant of the patent: **18.05.2011**
(21) Application number: 06829967.6
(22) Date of filing: 09.11.2006
(51) Int. Cl.: B01J 20/286, B01D 15/18, G01N 30/72

(54) **PARTICLES FOR USE IN A MOBILE SOLID CHROMATOGRAPHY PHASE**
TEILCHEN ZUR VERWENDUNG IN EINER MOBILEN FESTEN CHROMATOGRAPHIEPHASE
PARTICULES

(30) Priority: 09.11.2005 SE 0502485
(43) Date of publication of application: 03.09.2008
(73) Proprietor: Nanosep AB, 114 26 Stockholm (SE)
(72) Inventor: VIBERG, Peter, 240 36 Stehag (SE); SPÉGEL, Peter, 256 57 Ramlösa (SE)
(74) Representative: Andersson, Björn E.
(86) International application number: PCT/EP2006/068311
(87) International publication number: WO 2007/054548

(56) References cited:
- EP-A- 1 552 752
- EP-A- 1 733 786
- EP-A- 1 750 127
- WO-A-00/45951
- WO-A-01/37987
- WO-A-03/090921
- WO-A-2005/019102
- WO-A-2005/073263
- US-A1- 2002 104 801
- US-A1- 2003 125 656
- US-A1- 2005 118 409
- US-A1- 2005 181 378
- US-A1- 2005 242 037
- US-B1- 6 531 523
- DATABASE WPI Week 200427 Derwent Publications Ltd., London, GB; AN 2004-292443 XP002440127 & SE 525 599 C 15 March 2005 (2005-03-15) -& SE 525 599 C2 (NILSSON STAFFAN [SE]; SPEGEL PETER [SE]; VIBERG PETER [SE]; SCHWEITZ L) 15 March 2005 (2005-03-15)
- BÄCHMANN K ET AL: "New Particles as Pseudostationary Phase for Electrokinetic Chromatography" CHROMATOGRAPHIA, vol. 45, no. 1, 1997, pages 249-254, XP002440125 cited in the application
- HUANG M-F ET AL: "SEPARATION OF LONG DOUBLE-STRANDED DNA BY NANOPARTICLE-FILLED CAPILLARY ELECTROPHORESIS" ANALYTICAL CHEMISTRY, AMERICAN CHEMICAL SOCIETY. COLUMBUS, US, vol. 76, no. 1, 1 January 2004 (2004-01-01), pages 192-196, XP001047459 ISSN: 0003-2700 cited in the application

## Description

### Field of the Invention

This invention pertains in general to the field of particles. More particularly the invention relates to particles as mobile solid phase in chromatography.

### Background to the Invention

The dominating technique for performing analytical separations today is chromatography. Traditionally this is performed using a pump that transports a sample and a mobile phase through a column that contains a stationary phase. This technique is often referred to as liquid chromatography (LC) or high performance liquid chromatography (HPLC). One of the dominating types of this technique uses a *hydrophobic* stationary phase consisting of silica particles coated with hydrophobic molecules, whereas the mobile phase is hydrophilic. Another type of this technique uses a chiral stationary phase, to which chiral molecules bind to different extents. Partitioning of the sample components between these two phases are the basis of the separation. Thus, it is important that the mobile phase and the stationary phase have different properties. After elution of the sample molecules from the column, the sample molecules are collected or detected using different techniques. One major problem with this traditional setup is that most samples contain compounds that stick hard to the stationary phase, hence the stationary phase becomes contaminated and changes behaviour. The column will eventually have to be exchanged because of this contamination.

Previously, we have developed a technique in which a disposable mobile solid phase in the form of nanoparticles was used to overcome problems related to contamination of the stationary phase from adsorption of sample components or sample matrix. By using a partial filling (PF) application of capillary electrochromatography (CEC), a plug of nanoparticle in transport fluid (in the form of a slurry) was injected prior to the sample into a thin capillary column. As a voltage was applied over the column, the sample components started to move through the plug of nanoparticles slurry and were consequently separated. Finally, the sample components were eluted in front of the nanoparticle plug and were detected using e.g. optical methods such as UV-detection. However, a major limitation of this technique was that analytes that co-eluted with the nanoparticles could not be detected. Also, the use of two injection steps in the method hampered the stability and reproducibility of the technique. Thus, a technique in which a particle slurry was continuously introduced in the capillary column and in which the sample components could be detected even as they co-eluted with the particles is needed.

Bächmann et al (Bäckmann, K., Göttlicher, B., Chromatographia, 1997, Vol. 45, p. 249-254) have described the use of silica particles coated with 10-carboxydecyldimethylsilane in electrokinetic chromatographic separations of fluorescent compounds. The use of an inert core means that only a very limited part of the mobile solid phase, i.e. a limited part of the coating, takes part in the separation and thereby the separation capacity is significantly reduced, since the area or volume that interacts with the analyte is severely reduced. The use of the coating to both enable the separation of sample components and to prevent the particles from sedimentation, restricts the possibility to adopt the particles to a specific type of separation.

Huang et al (Huang, M.-F., Kuo, Y.-C, Huang, C.-C, Chang, H.-T, Anal. Chem., 2004, Vol. 76, p.192-196) have described the use of nanoparticles of gold hydrodynamically coated poly(ethylene oxide) as stationary phase to separate DNA with capillary electrophoresis. This type of particles is not suitable as mobile solid phase as the coating not is attached to the core. Additionally, the poly(ethylene oxide) will most probably leak into the mass-spectrometer and severely reduce the detection limit, when mass-spectrometry is used to detect separated analytes.

Recently, the present inventors have invented a technique that uses a new phase for every new separation and that solves the above mentioned injection and elution limitations. This phase, called mobile solid phase, is continuously introduced into the separation device in the form of a slurry of nanoparticles in transport fluid. As the nanoparticle slurry is continuously exchanged as it is pumped through the column, each new analysis is performed on a new unused solid phase. In this way, adsorption of sample components that could destroy the column is no longer a problem. Besides from interacting with the sample components, the mobile solid phase should move with a velocity that is different from that of the sample components. Then, sample components that bind the mobile solid phase will move with a velocity through the separation system that differs from the velocity of those that do not bind. This difference in migration velocity is the basis for separation. Compared with traditional techniques one difference is that the solid phase is mobile and not immobilized in the column. The continuous elution of nanoparticles from the capillary makes optical detection methods, such as UV-detection, impossible. Also, traditional mass spectrometric detection is impossible as the eluting nanoparticles seriously would contaminate the mass spectrometer. To enable detection of the sample components that co-elutes with the mobile solid phase, the mobile solid phase needs to be separated from the sample components prior to the detector. This can be achieved with e.g. an angled (e.g. orthogonal) electrospray ionization source in which the sample components are accelerated into the mass spectrometer while the mobile solid phase is hindered from entering the mass spectrometer, as disclosed in US6909091 and SE 525599.

Hence, an improved particles as mobile solid phase would be advantageous and in particular particles allowing for increased flexibility, cost-effectiveness, improved separation technique, and improved relation between analyte and said particles would be advantageous.

### Summary of the Invention

Accordingly, the present invention preferably seeks to mitigate, alleviate or eliminate one or more of the above-identified deficiencies in the art and disadvantages singly or in any combination and solves at least the above mentioned problems by providing particles for use in a mobile solid phase for chromatographic separation of sample components, wherein said particles comprise a core and a coating, wherein said core interacts with at least one analyte and said coating essentially prevents flocculation or aggregation. These technical effects are achieved with the particles according to claim 1, method of manufacture according to claim 11, and the use according to claim 12. Further advantages and characterizing features of the present invention are apparent from the appended specification, drawings and dependent claims.

### Brief Description of the Drawings

These and other aspects, features and advantages of which the invention is capable of will be apparent and elucidated from the following description of embodiments of the present invention, reference being made to the accompanying drawings in which
Fig. 1 discloses the effect of the acetonitrile concentration in the electrolyte on the separation of dimethyl phthalate (Δ), diethyl phthalate (■), and dipropyl phthalate (◆), wherein (A) separation efficiency in terms of number of theoretical plates per meter as a function of the acetonitrile concentration in the electrolyte, (B) the logarithm of the retention factor plotted against the concentration of acetonitrile in the electrolyte, (C) resolution between dimethyl phthalate and diethyl phthalate at different concentrations of acetonitrile in the electrolyte, is illustrated;
Fig. 2 illustrates an electrochromatogram showing RP-CFF-CEC-ESI-MS of a homologous series of dialkyl phthalates with DMSO (1) as unretained EOF marker, wherein Dimethyl phthalate (2) elutes first followed by diethyl phthalate (3), and dipropyl phthalate (4), and the electrolyte was modified with 30% (v/v) acetonitrile;
Fig. 3 illustrates the structure of the amines used to investigate IE-CFF-CEC (Diphenhydramine (1), salbutamol (2), and imidazole (3)), and the amines were separated using (A) CE and (B) CFF-CEC, and Diphenhydramine was not detected due to very strong retention;
Fig. 4 illustrates the repeatability and suspension stability study, wherein the retention factor versus the time passed from ultrasonication has been studied (Suspension electrolyte: ammonium carbonate pH 8.2:acetonitrile (70:30 (v/v));
Fig. 5 illustrates a zoom of electrochromatograms from CFF-CEC analyses at two different sample concentrations, wherein the heights of the peaks have been re-scaled for easier comparing, and the scale of the x-axis are identical for both electrochromatograms (Suspension electrolyte: ammonium carbonate pH 8.2:acetonitrile (70:30 (v/v));

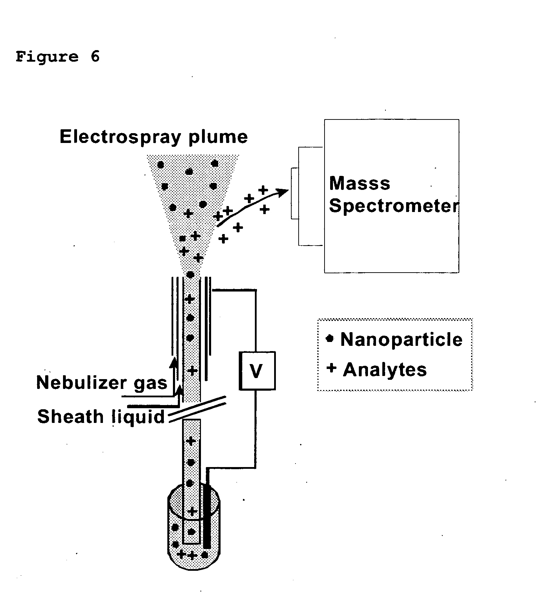

Fig. 6 illustrates the orthogonal interface between the separation system and the mass spectrometer;
Fig. 7 illustrates the separation performed with PEG 900 trans-esterified MAA-TRIM particles 0.5mg/mL, wherein the electrolyte consisted of 65% 10mM ammonium acetate buffer pH 5.4, and 35% MeCN, and the concentration of mobile solid phases was varied;
Fig. 8 illustrates (A) Free zone electrochromatography of methyl-, ethyl-, propyl-, and butyl esters, wherein the electrolyte consisted of 65% 10mM NH4Ac pH 5.4 and 35% MeCN; and (B) Separation of methyl-, ethyl-, propyl-, butyl esters using a continuous full filling approach with a slurry of PEG 900 trans-esterified particle, wherein the electrolyte consists of 65% 10mM NH4Ac pH 5.4 and 35% MeCN and 0.5mg mL⁻¹ particles;
Fig. 9 illustrates separation of methyl-, ethyl-, propyl-, and butyl esters using a continuous full filling approach with sulphated divinyl benzene particles at different contents of MeCN, wherein the electrolyte consisted of 20-40% MeCN and 10mM NH4Ac buffer pH 5.4.

### Detailed Description of Preferred Embodiments

The following description focuses on embodiments of particles, methods, uses, and manufacturing methods according to the present invention applicable to a separation system, such as a chromatographic separation system.

The present invention describes particles that can form stable suspensions in the transport fluid as well as having properties differing from the transport fluid. Furthermore, the present invention describes particles that can exclude one or several sample components from interacting with the particles. The present invention also describes the use of these particles in different separation and analysis applications.

The term "integrated separation and analysis system" refers to a separation system and an analysis system, in which several components are efficiently connected, thus enabling the system in a single process.

The term "mass sensitive detector" refers to an apparatus that is analyzing, detecting or separating ions or molecules concerning mass or charge or combinations thereof.

The term "mass analyzer" refers to an apparatus that analyzes or separates ions or molecules concerning mass and or charge. The mass analyzer is thus a part of the mass sensitive detector.

The term "ionization source" refers to an apparatus that allows ions to be formed from molecules or ions.

The term "angled ionization source" refers to an ionization source that is in a measurable angle, determined from the outlet of the transport system to the inlet of the mass analyzer.

The term "detector" refers the detector present in the mass sensitive detector. The detector registers or detects ions or molecules.

The term "solid phase" refers to a particle based material that is solid.

The term "mobile solid phase" describes that the solid phase is mobile, i.e. it moves in a transport fluid or it is carried by a transport fluid.

The terms "stationary" and "solid" in respect of mobile phases may be used interchangeably.

The term "transport fluid" refers to a fluid or super critical fluid that travels through the transport system. The sample, containing the sample components, and the mobile solid phase can be transported and/or migrate in the transport fluid through the transport system.

The term "transport system" refers to the equipment or apparatus that is used to transport the transport fluid and/or the mobile solid phase and/or the sample components to, by or into the mass sensitive detector.

The term "selector" refers to a unit that has selectivity for one or more of the sample components.

The term "online" refers to a course of events in the transport system.

The term "offline" refers to a course of events that is outside the transport system.

The term "qualitative separation and/or analysis" refers to separations and/or analyses conducted in order to identify one or more of the sample components in the sample according to their characteristics.

The term "sample component" refers to one of the components in a sample.The term "analyte" refers to a sample component to be separated and/or detected.

### The separation and analysis system

All chromatographic techniques rely on differences in character between the mobile phase (transport fluid) and the stationary phase, in order to facilitate interactions between the stationary phase and the sample components. But with techniques employing moving stationary phases this may cause problems as that difference may make the stationary phase unstable in the transport fluid. For example, in the case with particles as moving stationary phase, this unstability can make the moving stationary phase flocculate or aggregate (the characteristics between the particles are the same) and sediment. In order to produce a stable suspension of stationary phase, the particles need to have similar characteristics as the transport fluid. This is the traditional paradox with moving stationary phases for chromatography: In order to perform chromatography, there should be differences in characteristics between the stationary phase and the transport fluid, but at the same time, the stationary phase need to have similar characteristics as the transport fluid in order to form a stable suspension. This paradox is solved with our invention. Our particles have a core that has different characters than the transport fluid (for example the core is hydrophobic while the transport fluid is aqueous), but this core has a coating that has similar characteristics as the transport fluid (for example a hydrophilic coating and an aqueous transport fluid). This gives particles that can form stable suspensions in the transport fluid, but still interact with sample components that penetrates the coating.

As for traditional chromatography performed with packed columns, the mobile solid phase should differ in character from the transport fluid (mobile phase) in order to facilitate interactions with the sample components. A consequence of this is that it is problematic to produce stable slurries of the mobile solid phase in the transport fluid. A stable slurry means that no or very little flocculation, aggregation or sedimentation takes place. For instance, if the system is used for reversed phase separations the mobile solid phase is hydrophobic and the transport fluid is hydrophilic. The stability of the particle in transport fluid slurry will be limited because of flocculation, aggregation and sedimentation of the mobile solid phase caused by the hydrophobic effect. A consequence of a mobile solid phase with poor stability in transport fluid slurry is that the conditions under which separation and analysis can take place is seriously limited. Another problem that can occur due to large differences in the properties of the mobile solid phase and the transport fluid is that some sample components can interact extremely strong with the mobile solid phase. The result of such very strong interactions can be slow interaction kinetics resulting in very poor chromatography. An example of such interactions is the interaction of proteins and other bio- or synthetic polymers with hydrophobic/ion exchange groups via multiple site interactions.

According to the present invention the mobile solid phase used in this invention is composed of particles that are composed of at least two different materials. The inner part of the particle is referred to as the core whereas the outer part of the particle is referred to as the coating. According to one embodiment
the particle is prepared from particles prepared using a method free from surfactants and emulsion stabilizers, these particles are thereafter modified to yield chemical functionalities on the surface, used to couple the coating to the particles surface to form particles. Chemical functionalities on the core particle can also be introduced during synthesis of the core particle. Also, by optimisation of the synthesis protocol, it is possible to obtain the coated core particle in one single process. The size of the particle should be such that the particle not will sediment due to gravitation in the transport fluid. Typical sizes of the particle is thus from about 1 nm to about 10 micometers. The larger the particles become, the bigger the problems with sedimentation becomes. The preferred sizes are below about 20 nm, for achieving the best separation, or, above about 20 nm for simplifying the separation of the particles from the sample components just before detection.

In one embodiment are not all of available functionalities used to couple the coating.

The coating on the particle should promote stable slurries of the particles in the transport fluid. The properties of the particles should be such that they do not flocculate or aggregate and sediment in the transport fluid.

Thus, in one embodiment, the coating has chemical properties close to those of the transport fluid.

In another embodiment the coating has characteristics that promote repulsive forces between particles. The coating can stabilise the slurries of particles in the transport fluid by electrostatic repulsion, steric effects, solvation effects or mixes thereof.

Electrostatic repulsion can be achieved by forming a coating containing ionisable functionalities or functionalities that possesses a constant charge. The particles will then be hindered from flocculating by columbic repulsion between the particles of similar charge.

Stabilisation of the particle in transport fluid slurry can be also be achieved using steric repulsion between chains or polymers bond to the surface of the core particle. Steric repulsion is due to the loss of entropy that results when two molecules approach each other. The loss in entropy is due to the hindered motion, and loss of conformational freedom, of the molecules that are situated close together. Steric repulsion can be achieved by covalently coating the cores with chain-like molecules, linear polymers or branched polymers. When the surface of two particles approach each other, the chains attached to the two surfaces comes close together and they loose in entropy. The result is that the particles are pushed apart.

The particle in transport fluid slurry can be stabilised by solvation effects meaning that the surrounding transport fluid has properties that are very close to those of the particle coating. This means that there is no or very little difference in chemical properties of the particle surface and the surrounding fluid. The fluid can not differentiate between itself and a particle. Then there will be no driving force for excluding the particles from the surrounding transport fluid solution and thus no flocculation or aggregation will occur. These properties can be based on hydrophilicity, hydrophobicity or other parameters such as electrostatics or a combination thereof.

The stabilisation of particle in transport fluid slurry can also be based on mixed mode stabilisation. With mixed mode stabilisation is meant any combination of electrostatic, steric or solvation effects.

In another embodiment of the system the particles are porous. Porous particles have a higher surface area and thus the separation system in which they are used will have a larger sample capacity. Also, porous particles can be used in size exclusion separations.

In another embodiment of the system the particles are highly crosslinked. Highly crosslinked particles are much more mechanically stable than particles with a low degree of crosslinking. This can be advantageous in the handling of these particles.

In another embodiment of the system the particles have a low degree of cross linking. Particles with a low degree of crosslinking have a higher accessibility for sample components as they can diffuse into regions of low crosslinking. Thus, the capacity and mass transfer of these particles can be improved compared to more highly crosslinked particles.

Therefore, in another embodiments of the system 0 to 100 mole percent, such as 0, 5, 10, 15, 20, 25, 30, 35, 40, 45, 50, 55, 60, 65, 70, 75, 80, 85, 90, 95, 100 mole percent of the monomers are cross linking monomers. Different degrees of crosslinking can be beneficial for different applications of the system and for different monomers and cross-linking monomers and different combinations thereof.

In another embodiment of the system the cross linking monomer has 2, 3, 4, or 5 vinylic groups that can react during polymerisation. The number of vinylic groups on the crosslinking monomer determines how many chains that can grow from that monomer. This parameter can affect the size, shape and morphology of the particle.

In another embodiment of the system the particles are non-porous. Non-porous particles can be beneficial in analysis of large sample components. Mass transfer of large molecules from the transport fluid into the interior of a porous particle can be very slow, resulting in very poor chromatography. The chromatographic efficiency is in such instances greatly improved with a particle that hinders this type of diffusion, i.e. non-porous particles.

In another embodiment the particle is non-porous with respect to some sample components and porous for other sample components. This means that only sample components with a selected size can diffuse into the particle, whereas other larger sample components are hindered from entering the interior of the particle.

In another embodiment the particle is non-permeable with respect to some sample components and permeable for other sample components. This means that only sample components with a selected property can diffuse into the particle, whereas other sample components with other properties are hindered from entering the interior of the particle.

In another embodiment of the system the particles are either cationic or anionic. Cationic particles can be used for anion exchange separations of anions as well as be used for separation where adsorption and ionic interactions with cationic sample components should be avoided. Anionic particles could be used for separation of cationic sample components and for separations where adsorption and interactions with anionic sample components should be avoided.

In another embodiment of the system the particles are charge neutral. Neutral particles can be used for separations in which ionic interactions should be avoided.

In another embodiment of the system the particles are zwitter ionic or containing both cationic and anionic groups. These particles can be used in separations using both cation and anion exchange separations and for separation of sample components with complex charges.

In another embodiment of the system the particles are between about 1 nanometer and about 20 nanometer. Smaller particles are beneficial in terms of improving the intra particle mass transfer. The smaller the particles are, the more efficient the mass transfer is.

In another embodiment of the system the particles are between about 20 nanometer and about 10 micrometers, as mentioned before. The choice of larger particle size can be motivated by both production parameters and system requirements. Larger particles could be equipped with flow through pores, i.e. pores through the particle through which the transport fluid can flow and not only diffuse. Such particles can be used in applications where large components, such as cells, organells etc, should be separated.

In another embodiment of the system the ratio of mass to charge (m/z) of the particles are different, e.g. larger, than the ratio of mass to charge (m/z) of at least one analyte.

In another embodiment of the system is the particle size chosen in respect to an analyte or analytes of interest, i.e. the particle should be substantially larger than the analyte or analytes.

In another embodiment of the system is the particle size chosen in respect to an analyte of interest and sample component or components, i.e. the particle be small enough to give a sufficient separation sample components.

In another embodiment of the system the particles have a homogenous surface coating. A homogenous surface coating is beneficial in the system because of the ease of describing the system.

In another embodiment of the system the particles have a heterogenous surface coating. Heterogenous surface coatings allows many different types of interactions with the sample components as well as many different modes of stabilising the particle in transport fluid suspension. Thus, the particle could be applied in a much wider range of separations, e.g. different separation types and different samples and sample component ranges. Also, the transport fluid composition and type could be much more varied allowing the interaction type and strength to be greatly varied. The heterogenous surface coating may have several different chemical functionalities that may be distributed randomly or not. More than one of these functionalities may interact with the sample components, transport fluid or other particles.

In another embodiment of the system, parts of the particle coating comprise one, or several functionalities that may be spread randomly over said surface part. Different parts may interact differently with sample components, transport fluid or other particles. In another embodiment of the system the particles are monodisperse. Monodisperse particles are beneficial for producing a homogenous system. The diffusion, or flow path length, for a sample component entering the particle would be the same independent of which particle the sample component would encounter. The result of polydispersity would be a distribution of mass transfer restrictions resulting in a decrease in separation efficiency (broader sample component bands). Consequently, monodisperse particles may yield higher separation efficiency.In another embodiment of the system the particles are polydisperse. Polydisperse particles could be a consequence of the production method. Other properties of the particle, such as interactions with the analyte etc., could still motivate the use of them in the separation system.

In another embodiment of the system mixes of particles are used. Thus mixes of particles with different cores, different coatings, different sizes, different porosities etc can be used to create a system that could handle several different types of separations in one analysis.

The properties of the core may be important for the final separation of the particles from the sample components prior to detection.

In one embodiment of the system the core of the particle is synthesised using precipitation polymerisation. Precipitation polymerisation yields core particles in a surfactant free process. Surfactants should be avoided in the production due to the difficulties associated with removing them from the product. Also, small amounts of surfactants remaining on the particles could seriously decrease the signal intensity of the sample components in the detection system due to a decrease in ionisation in the electrospray.

In another embodiment of the system the core of the particle is synthesised using surfactant or emulsion stabiliser free emulsion polymerisation. With such a process a stabilising molecule is formed due to the reaction between the radical initator and a monomer present in the dispersive phase. Alternatively, the stabilising molecule could be added directly to the system. These stabilising molecules are then incorporated, i.e. covalently attached, into the produced particle. Thus particles could be produced that do not contain any free stabilising surface active molecules.

In another embodiment of the system the size of the core is chosen, i.e. substantially different, e.g. larger, from the sample components to be detected, to improve the separation of particles from the sample components prior to detection.

In another embodiment of the system the mass to charge ratio of the core is chosen, i.e. substantially different, e.g. larger, from the sample components to be detected, to improve the separation of particles from the sample components prior to detection.

In another embodiment of the system the core of the particle does not interact with all the sample components. In some separation systems the core interacts with some of the sample components but not with all. Thus, some of the sample components will not be separated from each other but from all the interacting sample components. This setup could be useful in sample clean up procedure.

In another embodiment of the system the surface of the core of the particle contains, phosphate groups, phosphonic acids, epoxides, aldehydes, carboxylic acids, primary amines, secondary amines, tertiary amines, quarternary amines, esters, ethers and/or hydroxyl groups that originate either from the monomers, the radical initiator, or other molecules used during or after synthesis of the core of the particle. Also, the monomer, or radical initiator, can give the surface of the core of the particle functional groups that can be reacted with a reagent to yield other functional groups. This process can also be done in several steps over several different functionalities. These different surface groups can be used to couple the coating to the core of the particle, to stabilise the particle in the transport fluid, or to facilitate production of the core of the particle or the surface coating .

In one embodiment of the system the core of the particle is composed of a hydrophobic polymer that is polymerised from one or several of the following monomers, methacrylates, vinlypyridines, acrylates, styrenes, or divinyl benzenes. An hydrophobic core of the particle is useful in reversed phase separations where the separation is based on the interaction of sample components with the particle dependent on the hydrophobicity of the sample components. Variation of the polymer type in the core of the particle yields particles with different characteristics, e.g. size, porosity, morphology, interactions with the sample components.

In one embodiment of the system the core of the particle is composed of a hydrophilic polymer that is polymerised from one or several of the following monomers, methacrylates, vinlypyridines, acrylates, styrenes, or divinyl benzenes. A hydrophilic core is useful in separating sample components depending on e.g. their hydrophilicity, e.g. hydrophobic substances having a few polar functionalities..

In another embodiment of the system the core of the particle is achiral or chiral. A chiral core is useful in applications where chiral sample components should be separated. For other types of separations, e.g. for separation of achiral sample components a chiral core might not be needed.

In another embodiment of the system, the chiral core can interact with chiral sample components. These interactions are the basis for chiral separations.

In another embodiment of the system, the chiral core can interact with achiral sample components. These interactions can be sample components specific or group specific, yielding separations with broad ranges of selectivities.

In another embodiment of the system the chiral core of the particle is created from chiral monomers. Producing the core of the particle from chiral monomers yields a chiral core of the particle in a one step process, which is advantageous from a production point of view. Furthermore, the reaction yield of such a synthesis is likely to be higher than for a multistep reaction.

In another embodiment of the system the chiral core of the particle is created from achiral monomers. By using a chiral molecule, or solvent, during preparation of the core of the particle, a chiral core of the particle can be produced without the need for chiral monomers. This is beneficial in cases in systems for which an appropriate chiral monomer can not be found.

In another embodiment of the system the core of the particle is made chiral through reaction with a chiral reagent. The chiral reagent could be a anionic, cationic, neutral, zwitterionic, or charged molecule or polymer. It could be proteins, macrocyclic antibiotics, cyclodextrins, crown ethers, amino acids, synthesised molecules, poly crown ether, polypeptides, and/or poly cyclodextrins.

The coating of the particle is important for stabilisation of the particle in transport fluid suspension.

It could also restrict the access for some types of molecules or sample components to the core of the particle.

In another embodiment of the system the coating does not interact with the sample component. The coating can be synthesised with the aim of only stabilising the particle in transport fluid suspension. Synthesis of such a coating is simplified as it only has one assignment, i.e. stabilising the particle suspension.

In another embodiment of the system the coating polymer is covalently bound to the surface of the core of the particle using acid chloride mediated reactions, carbodiimide mediated reactions, EDAC (1-ethyl-3-(3-dimethylaminopropyl)carbodiimid) mediated reactions, trans esterification, aldehyde group mediated reactions, reductive amination, covalent coupling to activated amines, covalent coupling to activated carboxylic acid groups, etc. Dependent on the type of coating that is to be immobilised different immobilisation schemes could be used.

In another embodiment of the system the coating polymer is covalently bound to functional groups on the particle surface that originates from the radical initiator used to initiate polymerisation.

In another embodiment of the system the coating polymer is covalently bound to functional groups on the particle surface that originates from the monomers.

In another embodiment of the system the coating is composed of a hydrophilic polymer such as poly ethylene glycol, poly propylene glycol, poly vinyl alcohol, poly ethylene imine. Hydrophilic polymers bound to a hydrophobic core of the particle are useful for reversed phase applications as they can stabilise the particle in polar transport fluid suspension.

In another embodiment of the system the coating is composed of small molecules immobilised onto the core particle. A small molecule could have molecular weights ranging between 10 g/mol up to 10000 g/mol. The small molecules could have one or several of the following functionalities, esters, ethers, primary amines, secondary amines, tertiary amines, quaternary amines, epoxides, sulphates, sulphonic acids, carboxylic acids, hydroxyl groups, phosphate groups, phosphonic acids, amides. The small molecule could also be a hydrocarbon or a fluorinated hydrocarbon. Small polar molecules could stabilise e.g. a hydrophobic core of the particle by being immobilised with a high recovery, yielding a high surface coverage. Also, small molecules that repel each other strongly, such as sulphonic acids etc, could be used with a lower coverage. Also, small hydrophobic molecules could be used to stabilise a hydrophilic core of the particle in a hydrophobic media.

In another embodiment of the system the coating polymer is linear, branched, an alternating co-polymer, a block co-polymer, contains one or several of the following functional groups, ethers, esters, phosphate groups, phosphonic acids , primary amines, secondary amines, tertiary amines, quarternary amines, epoxides, carboxylic acids, sulphonic acids and hydroxyl groups.

In another embodiment of the system the coating could be composed of one or several of the following groups of macromolecules, proteins, DNA, RNA, cellulose, starch, regenerated cellulose, modified starch, modified cellulose. Several of these naturally occurring polymers and molecules are compatible with biological samples.

In another embodiment of the system the surface coating of the particles is chiral or achiral. A chiral coating is useful for separation of chiral molecules when there is no need for large differences in properties of the transport fluid and the particle. For separations involving achiral sample components the chiral coating can introduce group or substance selective interactions.In another embodiment of the system the coating of the particle is made chiral by reaction of the surface coating with a chiral molecule or a chiral polymer that can be anionic, cationic, neutral, zwitterionic or charged. Also, the coating itself can be chiral. Chiral molecules or polymers that can be used are proteins, macrocyclic antibiotics, cyclodextrins, crown ethers, amino acids, synthesised molecules, poly crown ether, poly peptides, and/or poly cyclodextrins.

Stabilisation of the particles in electrolyte suspension can be governed by different mechanism. Properties of the particles that promote its slurry stability in the transport fluid are be related to the coating and optionally to the core of the particle.

In one embodiment of the system the particle in transport fluid slurry stability is governed by electrostatic repulsion between the particles. The electrostatic repulsion can evolve due to the presence of anionic groups on the coating, and optionally on the surface of the core of the particle or in the core of the particle coming from one or several of the following groups, sulphonic acids, phosphate groups, phosphonic acids, carboxylic acids or cationic groups on the coating coming from one or several of the following groups, primary amines, secondary amines, tertiary amines, and/or quaternary amines.

In another embodiment of the system the particle in transport fluid slurry stability is governed by steric repulsion between the particles. The steric repulsion between the particles can evolve due to the presence of polymer chains, as coating, on the surface of the core particle. These polymer chains can be anionic, cationic, neutral, charged or neutral. Ionic coatings could be useful for excluding charged sample components having the same charge as the coating from entering the core of the particle. This exclusion mechanism can be useful as a integrated sample cleanup step.

In another embodiment of the system the stability of the slurry of particles in transport fluid is governed by the solubility of the particles in the transport fluid that can be due to similarity in polarity between the particle surface coating and the transport fluid or be due to the small size of the particles. This coating is very useful in separations where the core should be accessible to all sample components in the sample. The sample components are then not able to distinguish between the transport fluid phase and the coating and thus mass transfer restrictions to the core of the particle should be limited.

One embodiment of the invention is the use of particles with a charged hydrophobic core and a neutral hydrophilic surface for separation of sample components on a ion-ion interaction chromatographic (ion exchange chromatography) and/or hydrophobic effect (reversed phase or hydrophobic interaction chromatography) basis. First of all, the particles should have charges, in order for them to have different mobilities than the transport fluid (this is important for the separation of neutral sample components). Sample components that are charged can interact with the charges on the core of the particles, and be separated dependent on the strength of this interaction. Only sample components with a charge opposite that of the charges on the core can interact positively with the particles. Sample components with the same charge as the core are repelled from the particles. Sample components with both positive and negative charges can also interact with the core. In addition to this, the interaction between sample components and the particles may also be governed by hydrophobic effects (also referred to as hydrophobic interactions) between the sample components and the core or coating of the particles. So the separation of sample components can arise from ion-ion interactions or hydrophobic interaction, or combinations thereof (mixed mode retention). Separations based on ion exchange and/or hydrophobic effect are the vast majority of all separations, so such particles are useful in most separation situations.

Another embodiment of the invention is the use of particles with a neutral hydrophobic core and a charged hydrophilic surface. With explanations similar to the embodiment described directly above, such a stationary mobile phase could also separate sample components through ionic interactions and/or hydrophobic interactions between the sample components and the particles.

One embodiment of the invention is the separation of sample components that have different chirality, for example enantiomers, by using particles with cores made in a chiral polymers or particles that have chiral coatings. For example the human body is built from chiral building blocks (molecules), therefore the human body will react differently to the two enantiomeric forms of a molecule. This is extremely important in the pharmaceutical industry and research, as one enantiomeric form of a molecule may function as a pharmaceutical in the body, while the other form is toxic to the body. Chiral separation is therefore of uttermost importance in the production line as well as in the research laborities in the pharmaceutical industry.

Another embodiment of the invention is the separation and analysis of sample components from samples with complex matrices (for example, but not limited to, blood, blood plasma, urine, sediment or tissue samples). The continuous re-filling of new particles in the separation column will ensure that contamination of the stationary phase or pseudostationary does not effect the next separations. Each sample injection is made on an unused stationary mobile phase.

Another embodiment of the invention is the separation and analysis of sample components from samples with complex matrices, by using particles that have a surface or a core that interacts more with the sample matrix molecules than with the other sample molecules. So matrix molecules will early in the separation be retained by the moving stationary phase, and thus removed from and hindered from interfering with the other sample molecules during the analysis. This embodiment relates the use of the technique for sample clean up, which is an important part of current analytical chemistry.

In another embodiment of the invention, the particles are hindered from entering the mass spectrometer by an angled electrospray ionisation interface. The angle can vary from one degree up to 359 degrees.

In another embodiment of the invention the particles are excluded from entering the mass spectrometer by using an orthogonal electrospraying interface between the separation system and the mass spectrometer.

In another embodiment according to the present invention the particles are excluded from entering the detector or mass spectrometer by using dialysis.

In one embodiment of the invention the particles are excluded from entering the mass spectrometer by using a high-field asymmetric waveform ion mobility spectrometry (FAIMS) interface between the separation system and the mass spectrometer.

With the use of particles as a moving mobile phase in chromatographic separations follows the need for separating the analytes of interest for detection from the particles. With mass spectrometric detection it is of great importance to try to prevent the particles from entering the mass spectrometer as they cause contamination and increased noise. One of our embodiments is the use of angled electrospray mass spectrometry (ESI-MS), for example orthogonal ESI-MS. In such an interface between the separation system and the mass spectrometer, the particles are, often aided by a liquid sheath-flow and nebulizing gas, electrosprayed out of the separation system in a direction different from the direction of the sample components (the sample components are directed towards the inlet to the mass spectrometer). It is therefore necessary for the continuous full filling technique that the properties differ between the particles and the analytes in such ways that the analyte or analytes are separated from the particles. Forces acting on species leaving the separation system, that are interesting in this discussion, are (i) the forces from the nebulizing gas and (ii) the electrical forces on charged species that are created from the voltage difference between the outlet of the separation system and the inlet of the mass spectrometer. Large species are affected by the nebulizing gas flow to a larger extent than smaller species and heavier species are not affected as much as light species by the electrical field (it takes a greater force to accelerate a heavy species compared to a light species). Furthermore, the more net charges a specie carries, the more it will be affected by the electrical field. Consequently, a large and heavy species with few net charges are not as likely to travel towards the mass spectrometer inlet as a small and light species with a high number of net charges. In other words, it is the mass-to-charge (m/z) ratio that defines how affected a species is. This is important in the separation of analytes from the particles. For successful separations with mobile solid phases, the analytes to be analysed should have a smaller m/z than the particles. It is possible to either predict or determine the sizes of the particles (for example by scanning electron microscopy) and then to calculate the mass of the particles using their density. The mass of the analytes can be determined for example from its molecular formula, or by mass spectrometric studies. The charges depends both on the chemical groups on the species, as well as on the electrospray ionisation step. For example the pH of the sheath flow and the transport fluid may greatly affect the number of charges on the species, as well as the settings of the mass spectrometer parameters. Furthermore, random processes out of the control of the operator affects the charges on the species. Furthermore, parameters of the nebulizing gas, such as pressure and volumetric flow, has a huge effect on the separation of sample components from the particles. This means that the user of such a separation system has great possibilities to tune the system. For most of the analysis, the particles will have a size and a m/z that is much, much greater than that of the analytes in the sample, and thus have a huge resolution in their separation. But care must be taken when very small particles are used together with very large sample molecules. Using these discussions the particles used as mobile solid phase can be defined as follows: The m/z of the particles should differ from (be larger than) the m/z of the sample components to be detected by the mass spectrometer so that they can be resolved by the separation mechanism of the angled ESI-MS interface.

### EXAMPLES

### EXAMPLE 1

MilliQ water (MQ) was purified by a MilliQ system, Millipore, Bedford, MA, USA. Acetone, ammonium acetate, ammonium formate and acetic acid were from Merck, Darmstadt, Germany. Sodium persulphate, styrene and DVB were gifts from Polymer Chemistry, Lund University. Dimethyl phthalate and diethyl phthalate were from SigmaAldrich, St. Louise, MO, USA. Dipropyl phthalate and ammonium carbonate were from Aldrich, Gillingham, UK. Acetonitrile was from Merck, Hohenbrunn, Germany, lauryl methacrylate (LMA) was from Fluka, Buchs, Germany, nitrogen gas was from AGA, Sundbyberg, Sweden, and formic acid was from Riedel-de Haën, Seelze, Switzerland.

The radical initiator (sodium persulphate) (15 mg and 6 mg) was dissolved in water (A 9.6mL and B 5.9 mL) in a round bottom flask. The monomers (DVB (A 16.7 µl and B 6.7 µl), LMA (A 250µl and B 100 µl), and styrene (A 250 µl and B 100 µl)) and co-solvent (acetone (A 0 µl or B 3.9mL)) were added and the solution was ultrasonicated for one minute and degassed by a stream of nitrogen gas for five minutes. The flask was thereafter connected to a Liebig cooler and polymerisation was performed at 60°C (A) or 90 °C (B) during stirring under nitrogen atmosphere for four hours. The obtained particle suspension was purified from remaining initiator, monomers and small oligomers by dialysis using regenerated cellulose membranes with a cut-off of 8-12.000 Da (Spectrum Europe B.V., Breda, The Netherlands) against a continuous flow of deionised water for 72 hours. The purified particle suspensions were stored in sealed glass test tubes at 8°C until use. Characterisation of the particles was performed using transmission electron microscopy (TEM) (JEOL 3000F field emission transmission electron microscope, JEOL, Tokyo, Japan) or light microscopy using a Carl Zeiss Axio Imager M1m equipped with an AxioCam MR.5 computer controlled camera (Carl Zeiss AG, Göttingen, Germany).

### Capillary electrochromatography

CFF-CEC experiments were performed on a Hp^{3D} CE system (Agilent Technologies, Waldbronn, Germany), with Chem Station software (V.B01.03) for data processing. A fused silica capillary (87 cm, 50 µm i.d., 375 µm o.d.) obtained from Polymicro Technologies (Phoenix, AZ, USA) was used for all experiments. The electrolyte was prepared from 50 mmol L⁻¹ ammonium carbonate at pH 8.2 with 0 to 40% (v/v) acetonitrile. The particle in electrolyte suspensions used in CFF-CEC experiments had a particle concentration of 3.8 mg mL⁻¹ in 50 mmol L⁻¹ ammonium carbonate pH 8.2 and 0 to 40% (v/v) acetonitrile. Separation was performed at 20 kV (230 V/cm) at ambient temperature. Prior to the first analysis of the day, all solutions and particle suspensions were degassed by ultrasonication for approximately 10 minutes. Prior to each analysis, the capillary was rinsed with 0.1 mol L⁻¹ ammonium hydroxide (1min at 1 bar), water (1 min at 1 bar), and with electrolyte (2 min at 1 bar). Finally the capillary was filled and conditioned with particles suspension (2 min at 1 bar).

A stock sample solution of dimethyl phthalate (24.2 g L⁻¹; 0. 125 mol L⁻¹), diethyl phthalate (21.89 g L⁻¹; 0.098 mol L⁻¹), dipropyl phthalate (20.6 g L⁻¹; 0.0825 mol L⁻¹), and DMSO (66 g L⁻¹; 0.85 mol L⁻¹) in methanol was prepared. This stock solution was diluted in water (1:1000 v/v), to give a sample solution of 125 µmol L⁻¹ dimethyl phthalate, 98 µmol L⁻¹ diethyl phthalate, 82.5 µmol L⁻¹ dipropyl phthalate, and 850 mmol L⁻¹ DMSO. Samples were injected hydrodynamically during 5 seconds at 50 mbar. A stock sample solution of salbutamol, diphenhydramine and imidazole each at 1 mg mL⁻¹ in methanol was prepared. Prior to analysis, this stock solution was diluted to the desired concentration with electrolyte.

### Mass spectrometry

Detection was performed on an Agilent Technologies LC/MSD ion trap SL mass spectrometer equipped with an orthogonal ESI interface operated in positive ionisation mode. The electrospray voltage was 4 kV (the outlet of the capillary was maintained at near ground potential). The sheath liquid, consisting of 0.5% (v/v) formic acid in water and methanol (1/1 v/v), was pumped at 0.120 mL min⁻¹ by an Agilent Technologies series 1100 quaternary pump and split 1:20 by a fixed splitter. The CE instrument was coupled to the ESI interface using an Agilent Technologies triple tube coaxial nebulizer.

### Results and discussion

Soap free emulsion polymerisation is a variant of traditional emulsion polymerisation. The emulsion stabilisation is governed by the incorporation of a hydrophilic initiator, an ionic initiator, a hydrophilic co-monomer or an ionic co-monomer. In this study, the ionic and water soluble initiator sodium persulphate was used together with the hydrophobic monomers styrene and LMA. When these ingredients are mixed in water, a two phase system is created with one initiator rich aqueous phase and one monomer phase. Reactions between the initiator and the monomers in the aqueous phase create small surface active radical oligomers. Agitation is used to create mini monomer droplets that efficiently capture the surface active oligomer radicals. Thus, the created oligomer radicals accumulate at the interface between the aqueous and the monomer phase and thus emulsify the system.

The obtained particle suspensions contains contaminants, such as unreacted or decomposed radical initiators and monomers and inorganic cations (e.g. Na⁺ from the radical initiator) that potentially could have adverse effects on the separation as well as on the detection. Dialysis against a continuous flow of deionised water using a high molecular weight cut-off membrane was used for purification.

The first particles (A) had an average diameter of 910 nm (relative standard deviation (RSD) of 19%, n=89). The particles (B) that were prepared with a lower total monomer concentration, a higher polymerisation temperature and with acetone as a co-solvent had an average diameter of 157 nm (SSD of 22%, n=60). The particles (A and B) had a hydrophobic core that was composed of styrene and LMA, and a hydrophilic surface that contained strong cat ion-exchange sulphate groups

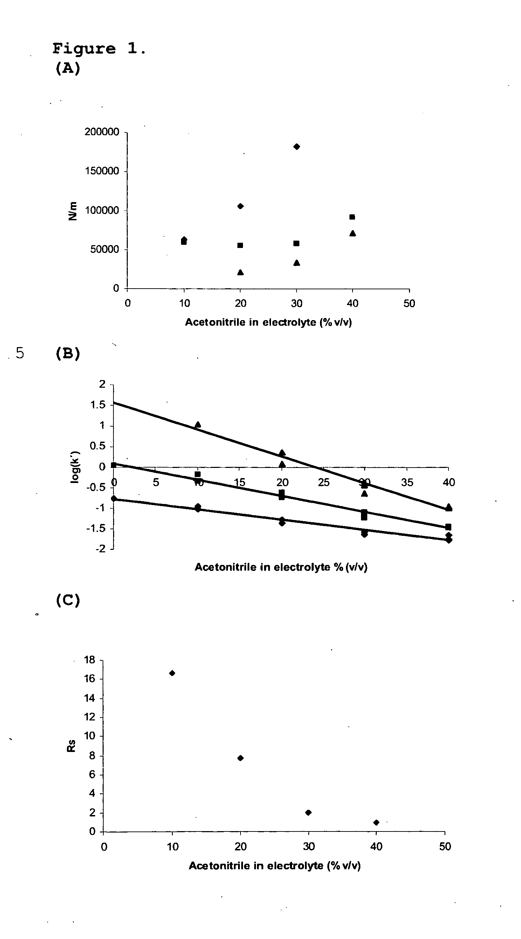

The fraction of acetonitrile in the electrolyte was varied between 0 and 40% (v/v), and the effect of the acetonitrile concentration on the retention factor (k'), the resolution (Rₛ) and the efficiency (N) was studied, as illustrated in Fig. 1. The slopes of the lines follows the same order as the log P values of the analytes, with dipropyl phthalate highest followed by dimethyl and diethyl phthalate.

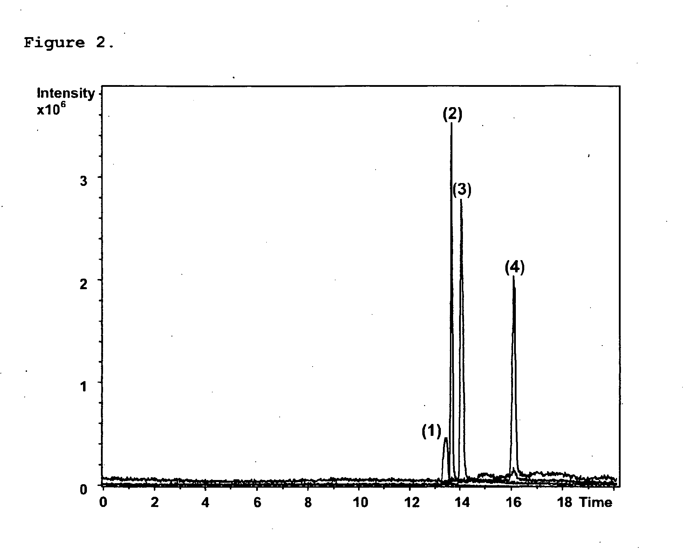

It is also evident from Fig. 1 that the resolution increases exponentially with decreasing acetonitrile concentration, which is expected for a RP separation. A RP-CFF-CEC separation of the phthalates is shown in Fig. 2.

The particles that were used in this study had a high negative mobility which results in a broad migration time window (the time between the elution of an unretained EOF marker and the elution of the particles). Because of the high separation efficiency and the broad migration time window, the peak-capacity for the technique is excellent with the potential to resolve more than 100 peaks.

The influence of the particles on the analyte signal and the base line noise was briefly investigated. Neither the base line noise nor the analyte signal was affected significantly when the particle concentration was doubled (from 3.6 to 7.2 mg mL⁻¹). This effect is attributed to the efficient separation of particles from analytes in the orthogonal electrospray interface.

The particles had a strong cation-exchange surface which made them interesting for use as strong ion-exchange sorbent. Three model compounds, the short-acting P₂-adrenergic receptor agonist salbutamol, the antihistamine diphenhydramine and the aromatic imidazole, where used to investigate the use of the particles in IE-CFF-CEC. The basicity of the analytes is highest for salbutamol (pKₐ = 9.22±0.47), followed by diphenhydramine (pKₐ = 8.76±0.28) and imidazole (pKₐ = 7.18±0.61). The hydrophobicity of the analytes follows the order of diphenhydramine (logP = 3.662±0.369), salbutamol (logP = 0.015±0.301); and imidazole (logP = -0.161±0.241). The values where calculated using Advanced Chemistry Development Software V8.14 (ACDLabs, Toronto, Canada).

From initial studies it was found that diphenhydramine was most strongly retained, followed by salbutamol and imidazole. The retention thus followed the hydrophobicity of the analytes.

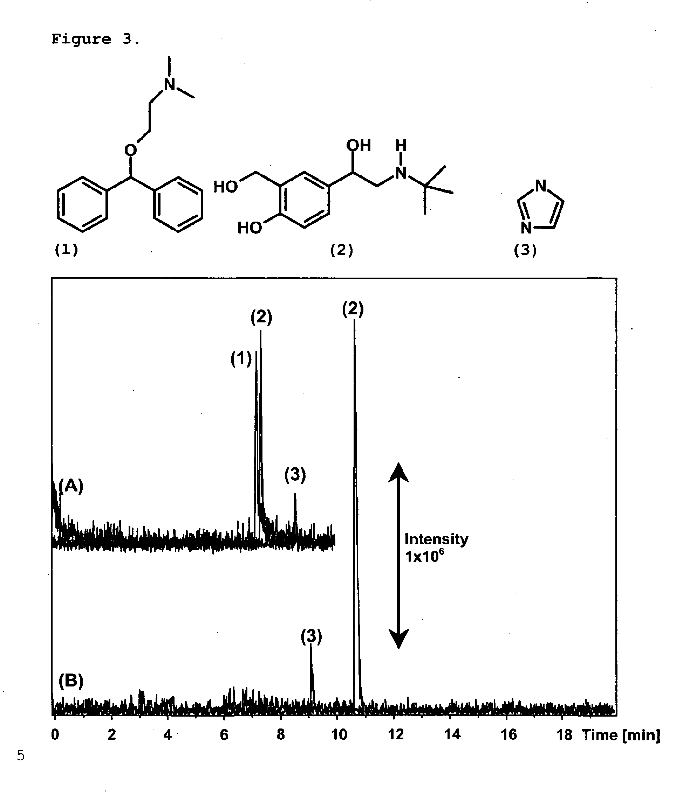

A CE separation and a CFF-CEC separation of the amines are shown in Fig. 3. It is evident that CFF-CEC has altered the elution order compared to CE. Diphenhydramine is strongest retained and was therefore not detected. From Fig. 3 it is also evident that neither the base line noise, nor the analyte signal, are significantly affected by the presence of particles. To investigate the influence of hydrophobicity on the retention, a series of separations were performed with varying concentration of acetonitrile in the particle suspension. It was found that the retention of salbutamol and imidazole did not change significantly with acetonitrile concentration. However, at 40% acetonitrile diphenhydramine was detected, even though it was strongly retained. The separation of the amines with CFF-CEC is probably due to a mixed mode retention mechanism, with contribution from both ion-ion interactions and the hydrophobic effect.

It was also found that the k' does not vary significantly with the electrolyte pH. The slope of the regression lines for k' as a function of pH are -0.0005, 0.0002, and 0.0027 for dimethyl phthalate, diethyl phthalate and dipropyl phthalate respectively. The relative standard deviations (RSDs) for k' at the different pH were 8.5%, 2.8%, and 5.3% for dimethyl phthalate, diethyl phthalate, and dipropyl phthalate, respectively. These results indicate that excellent RP retentions and suspension stabilities are obtained independent of the pH, within the investigated range. The broad pH-range over which the suspensions are stable makes the technique applicable for RP separations of analytes with both high and low pKₐ-values.

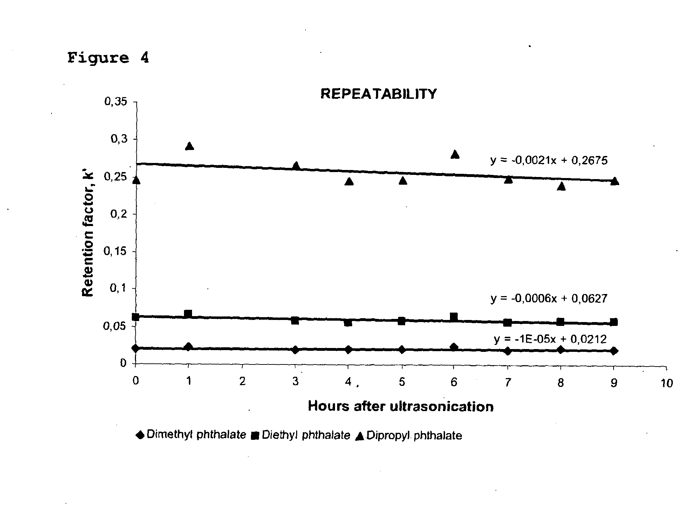

To further test the stability of the particle suspensions, separations were performed hourly over a nine hour period. The suspension was freshly prepared and ultrasonicated at time 0. No significant alteration in k' could be seen within this time period (Figure 4). The RSDs for k' were 7.4% (dimethyl phthalate), 6.0% diethyl phthalate, and 7.0% (dipropyl phthalate). The time period was chosen to evaluate the use of CFF-CEC during a normal working day.

Three batches of identical particles (A) were prepared. No significant deviation between the batches could be found (at 95% confidence interval). The RSD (n=3) for the k' between the three batches varied between 3% and 11%, for the investigated phthalates, which is only slightly higher than the repeatability that varied between 6.0% and 7.4%. The reproducibility for commercial RP-HPLC columns are typically lower, around 2-4%.

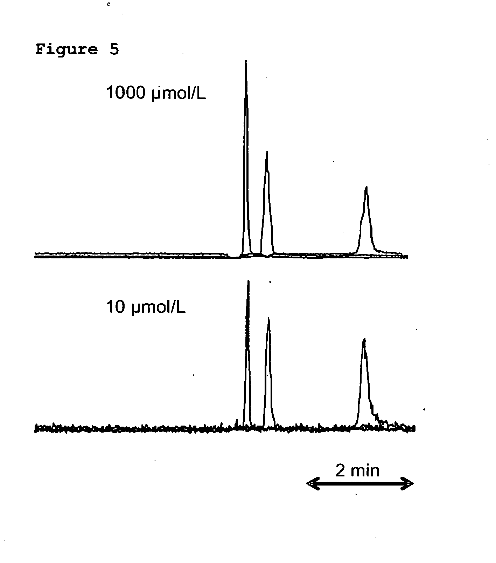

To investigate the sample load capacity, six different concentrations of analytes varying between 10 µmol L⁻¹ and 1 mmol L⁻¹ were injected and the resulting peak asymmetry factors were calculated for dimethyl phthalate and diethyl phthalate at 10% peak height. It was found that the asymmetry factor for dimethyl and diethyl phthalate are around the ideal 1 even up to 0.5 mmol L⁻¹, and as the sample concentration approaches 1 mmol L⁻¹ (the highest concentration injected) the asymmetry factor reaches values around 1.5, which still is acceptable for quantification purposes. Fig. 5 illustrates electrochromatograms obtained for 10 µmol L⁻¹ and 1 mmol L⁻¹ sample concentrations (a 1000% increase in concentration). These results show that the CFF-CEC technique efficiently can be used for quantitative purposes at a very wide concentration range. From the data obtained at the lowest investigated sample concentration (10 µM), the LODs were calculated to be approximately 0.7, 1.1, and 0.9 µM for diethyl phthalate, diethyl phthalate, and dipropyl phthalate, respectively. As an estimate, 5 nL of sample was injected into the 50 µm i.d. capillary, which results in LOD of injected amounts of approximately 3, 5, and 4 fmol. The LODs were calculated at signal-to-noise ratios (S/Ns) of 2. At the lowest concentration investigated, excellent separation efficiencies were obtained, with over 1.1. million theoretical plates per metre for dimethyl phthalate.

It is concluded that very efficient reversed phase and mixed mode (reversed phase and ion exchange) separations can be performed using particle based CFF-CEC-ESI-MS. The separations can be performed repeatably and reproducibly and the sample load range is wide. The use of an orthogonal electrospray interface enables detection of analytes that are co-eluting with the moving solid phase.

### Example 2.

### PEG-900 Transesterified Particles

Methacrylic acid (MAA) 0.109 M, trimethylolpropantrimethacrylate (TRIM) 0.109 M, AIBN 8 mg and acetonitrile 4 mL were added a screw capped borosilicate glass test tube, degassed by sonication for 10 min and put in a freezer at -26°C wherein the polymerisation was initiated by UV-irradiation at 350nm for 4 hours. The chemicals used had the same origin as those in the previous examples. Thereafter, the particles were extracted by centrifugation at 3000 rpm for 10 minutes followed by resuspension twice in methanol:acetic acid (9:1, v/v) and once in methanol using an ultrasonic bath for 20 min each.

To a solution of CH₃ONa (0.5M, 1mL) in MeOH, PEG 900 Aldrich (Gillingham, UK) (1mL, 2.5mmol) was added followed by concentration under reduced pressure at 45°C to form the alkaline PEG. Particles (5.6mg) were suspended in CH₂Cl₂ (0.6mL) and a solution of alkaline PEG (150µL, 0.5M alkaline PEG 900) was added under stirring at room temperature. The reaction was allowed to proceed over night and the particles were extracted by centrifugation at 3000 rpm for 10 min and resuspension (sonication for 10 min) twice in MeOH: HAc (9:1, (v/v)) and once in MeOH. The particles were stored in room temperature until use. Prior to analysis the PEGylated particles were washed once in electrolyte.

### Capillary Electrochromatography (CEC)

CEC experiments were performed on a HP^{3D}CE system (Agilent Technologies, Waldbronn, Germany), and Chem Station software was used for data processing. Fused-silica capillaries (70-cm-long, 50-µm-i.d., and 375-µm-o.d.) obtained from Polymicro Technologies (Phoenix, AZ) was used in all experiments. The sample solutions were prepared by dissolving dimethyl-, diethyl-, dipropyl-, and dibutyl phthalates in electrolyte to a concentration of 0.10 mg mL^{- 1} and 5-hydroxy dopamine, epinephrine, metaproterenol, terbutaline in water to a concentration of 50 µg mL⁻¹, 30 µg mL⁻¹, 10 µg mL⁻¹, and 4 µg mL⁻¹, respectively. Samples were injected into the capillary hydrodynamically (5 s, 50 mbar) and the separation voltage was 20 kV (286 V cm-1). All separations were performed at ambient temperature. Prior to analysis, all solutions and particle suspensions were degassed by sonication and the capillary was rinsed with 0.1 mole L⁻¹ NaOH (5min, 1 bar), water (5min, 1 bar), and electrolyte (5min, 1 bar).

The electrolyte consisted of 10mM ammonium acetate buffer pH 5.4 and acetonitrile in concentrations varying between 20% and 40%. Particles (0.5mg mL-1) were suspended in electrolyte to form stable slurries. Two different approaches were used for the experimental set-up i.e. the partial filling technique and the continuous full filling technique. Using the partial filling technique, the particle slurry is introduced into the capillary hydrodynamically at 50 mbar pressure, prior to the sample. The time required to fill the capillary was determined to 10 min, and hence were the injection times used for the partial filling experiments shorter. The continuous full filling experiments were performed with a continuous flow of particle slurry through the capillary. Using this set-up, the sample is injected info a capillary filled with slurry, and the analysis is performed with slurry used as electrolytes.

### Mass Spectrometric Detection

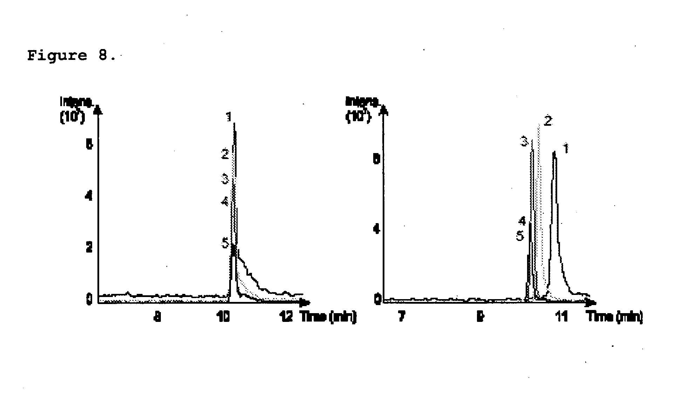

Detection was performed with an Agilent Technologies LC/MSD ion trap SL mass spectrometer equipped with an orthogonal ESI interface operated in positive mode, scanning between m/z 50 and 300 with a maximum ion accumulation time between 50 and 75 ms and a total ion current (TIC) target between 75 000 and 100 000. Sheath liquid flow consisted of 0.1% formic acid in water and MeOH (1:1 v/v) and was pumped at 0.180 mL min⁻¹ by an Agilent Technologies series 1100 quaternary pump and split 1:30 by a fixed splitter. The CE was coupled to the ESI interface using an Agilent Technologies triple tube coaxial nebulizer. The orthogonal interface prevents the particles from entering the mass spectrometer in the continuous full filling analysis, as illustrated in Fig. 8.

### Results and Discussion

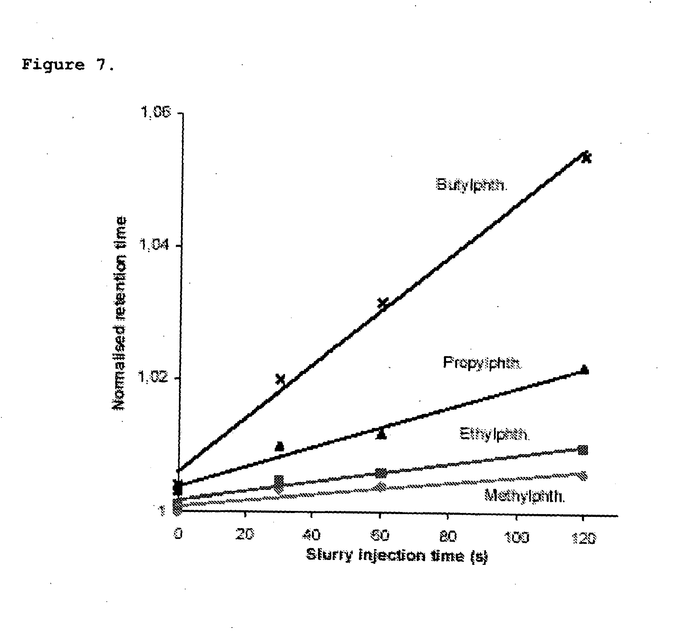

The hydrophobic effect was studied in electrolytes with low concentrations of organic modifier i.e. with acetonitrile concentrations between 20-40%. The sample components used were a homologue series of different alkyl phthalate. These molecules have no charge and will hence not have any electrostatic interactions with the negatively charged mobile solid phase. In order to minimise the difference in endoosmotic flow (EOF) between the different analysis, the retention time has been normalised towards the retention time of an EOF marker, DMSO D₆. The normalised retention time will hereafter be used throughout the article. Reconstructed ion chromatograms (RIC) were used to identify which peak that corresponds to which sample molecule. It has previously been shown that the retention of the sample molecules is proportional to the amount of particles injected into the capillary. As can be seen in Fig. 7, this is also the case in this reverse phase study with uncharged sample components. An interesting observation is that the signal intensity for a sample molecule was unaffected when passing through the mobile solid phase, as can be seen in Fig. 8.

### Example 3.

### Sulphated Divinylbezene particles

Particles were prepared in a screw capped borosilicate glass test tube using a previously described precipitation polymerisation protocol (see example 2) but with divinylbenzene (0.109 mol/L) as monomer. The precipitation of the particles starts as the particles reach their solubility limit due to increased molecular weight. The particles were after polymerisation extracted by centrifugation at 3000 rpm for 10 minutes followed by resuspending the particles twice in a solution of methanol and acetic acid (9:1, v/v) and once with methanol.

The particles (16mg) were suspended in an aqueous solution of Tween 80 (10mg 0.010M, 2mL). An aqueous solution of (NH4)2S208 (0.20mL, 8.8µmole) was added and the reaction mixture was heated to 80°C for 72 hour. The derivatised particles were extracted by centrifugation at 3000 rpm for 10 min and re-suspended (sonication for 10 min) twice in a solution of MeOH and H2O, (1:1 (v/v)) and once with MeOH. The particles were stored in room temperature until use and then prior to analysis washed once in electrolyte.

### Capillary Electrochromatography (CEC)

CEC experiments were performed on a HP3DCE system (Agilent Technologies, Waldbronn, Germany), and Chem Station software was used for data processing. Fused-silica capillaries (70-cm-long, 50-µm-i.d., and 375-µm-o.d.) obtained from Polymicro Technologies (Phoenix, AZ) was used in all experiments. The sample solutions were prepared by dissolving dimethyl-, diethyl-, dipropyl-, and dibutyl phthalates in electrolyte to a concentration of 0.10 mg mL-1. Samples were injected into the capillary hydrodynamically (5 s, 50 mbar) and the separation voltage was 20 kV (286 V cm-1). All separations were performed at ambient temperature. Prior to analysis, all solutions and particle suspensions were degassed by sonication and the capillary was rinsed with 0.1 mole L-1 sodium hydroxide (5min, 1 bar), water (5min, 1 bar), and electrolyte (5min, 1 bar). The electrolyte in the reversed phase experiments consisted of 10mM ammonium acetate buffer pH 5.4 and acetonitrile in concentrations varying between 20% and 40%.

The continuous full filling experiments were performed with a continuous flow of particle slurry through the capillary. Using this set-up, the sample is injected into a capillary filled with slurry, and the analysis is performed with slurry used as electrolytes. The steric effect in ion exchange chromatography (ion chromatography, ion-ion interaction chromatography) was evaluated using an electrolyte consisting of 20% 10mM ammonium acetate pH 5.4 and 80% MeOH and the injected particle suspension consisted of 2.5mg mL-1 sulphated divinyl benzene particles suspended in electrolyte.

### Mass Spectrometric Detection

Detection was performed on an Agilent Technologies LC/MSD ion trap SL mass spectrometer equipped with an orthogonal ESI interface operated in positive mode, scanning between m/z 50 and 300 with a maximum ion accumulation time between 50 and 75 ms and a total ion current (TIC) target between 75 000 and 100 000. Sheath liquid flow consisted of 0.1% formic acid in water and MeOH (1:1 v/v) and was pumped at 0.180 mL min-1 by an Agilent Technologies series 1100 quaternary pump and split 1:30 by a fixed splitter. The CE was coupled to the ESI interface using an Agilent Technologies triple tube coaxial nebulizer. The orthogonal interface prevents the particles from entering the mass spectrometer in the continuous full filling analysis.

### Results and Discussion

The precipitation polymerisation protocol facilitates the synthesis of spherical particles without the use of stabilising surfactants. This is essential as the surfactants decrease the signal intensity in the ESI-MS and hence hamper the detection possibility. This technique is also favourable as the surfactants might affect the derivatisation of the particles and it would also be questionable weather the increased suspension stability is due to the derivatisation step. By titration of the sulphated particles, using a highly diluted potassium permanganate solution, the conversion of the reacting carbon-carbon double bond was determined to be quantitative.

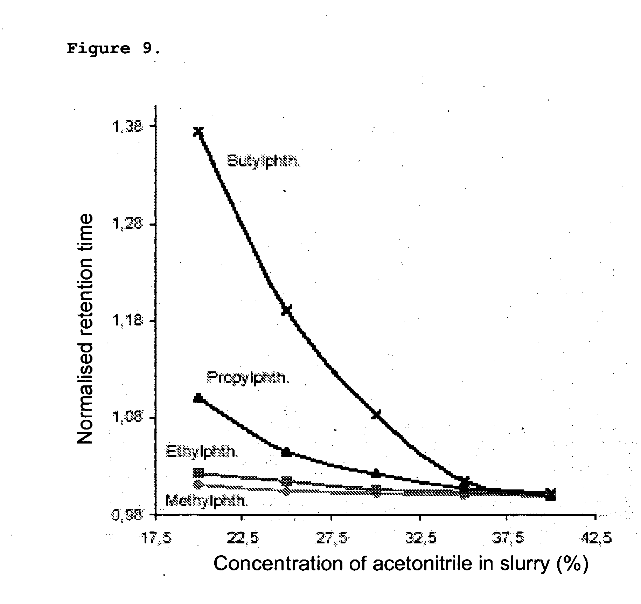

The normalised retention time for each of the phthalate esters separated using the sulphated DVB particles is shown in Fig. 9. In order to minimise the difference in endoosmotic flow (EOF) between the different analysis, the retention time has been normalised towards the retention time of an EOF marker, DMSO D6. Reconstructed ion chromatograms (RIC) were used to identify which peak that corresponds to which sample molecule. In Fig. 9 it can be seen that the hydrophobic effect disappears in acetonitrile concentrations higher then 40%. The interactions are stronger in electrolytes with a low content of acetonitrile.

### EXAMPLE 4

### Improved detection sensitivity through the use of a FAIMS interface between the separation system and the detector (a mass spectrometer).

Hithereto, the continuous full filling technique has been employed with the use of electrospray mass spectrometric detection where the electrospray has been performed with the use of sheath flow and nebulizing gas that has helped in separating the sample components from the particles. A disadvantage with sheathflow is that it dilutes the sample components eluting from the column. As electrospray ionisation in combination with mass spectrometry is a concentration sensitive detection technique, this dilution of the sample components (dilution is equivalent to decreasing the concentration) gives a decreased detection sensitivity. In order to overcome this problem, users of mass spectrometry have for several years used sheath-less electrospray, often in combination with low flow capillary based separation techniques. This far, the full filling technique has been relying on the use of sheath flow (as described above). However, with the use of a FAIMS electrospray interface between the separation system and the mass spectrometer, no sheath flow is needed and hence a higher detection sensitivity is obtained. This will greatly improve the continuous full filling technique in terms of not only sensitivity but also in an increased number of applications and sample types. Briefly, in the FAIMS interface the sample components are separated from the moving stationary phase through passages in adjustable electrical fields.

### EXAMPLE 5

### Particles used as restricted access material (RAM) through the use of a alkylediole coating on the particles

Methacrylic acid (MAA) 0.0505 M, trimethylolpropantrimethacrylate (TRIM) 0.0505 M, AIBN 8 mg and acetonitrile 4 mL were added a screw capped borosilicate glass test tube, sonicated for 10 min and degassed by a flow of nitrogen gas for 8 min and put in a freezer at -26°C wherein the polymerisation was initiated by UV-irradiation at 350nm for 4 hours. The chemicals used had the same origin as those in the previous examples. Thereafter, the particles were extracted by centrifugation at 3000 rpm for 10 minutes followed by re-suspension twice in methanol/acetic acid (9:1, v/v) and once in methanol using an ultrasonic bath for 20 min each. The obtained particles were re-suspended in acetonitrile and a chiral acrylic monomer was added together with a radical initiator. Polymerisation was initiated using a heated water bath (60 degree C) over night.

The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

In the claims, the term "comprises/comprising" does not exclude the presence of other elements or steps. Furthermore, although individually listed, a plurality of means, elements or method steps may be implemented. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

## Claims (Claims for the following Contracting State(s): AT, BE, BG, CH, CY, CZ, DK, EE, ES, FI, GR, HU, IE, IS, LI, LT, LU, LV, MC, NL, PL, PT, RO, SE, SI, SK, TR)

1. Particles for use in a mobile solid phase in chromatographic separation
and detection with a mass analyzer of sample components, wherein said particles comprise a polymeric core and a coating, **characterized in that**
said particles is of a size in the interval of 20 nm to 10 µm
, wherein said polymeric core is hydrophobic when the coating is hydrophilic, and said polymeric core is hydrophilic when said coating is hydrophobic, and that said coating is covalently bonded to said core, said polymeric core comprises at least one polymer which is polymerized from one or several of the monomers selected from the group of methacrylate, vinylpyridine, acrylate, styrene, and divinyl benzene, such that said polymeric core is suitable for interaction with at least one analyte and said coating is suitable for essentially preventing flocculation or aggregation.

2. Particles according to claim 1, wherein said core comprises a crosslinked polymer.

3. Particles according to claim 1, wherein said particles are charged.

4. Particles according to claim 1, wherein said particles are zwitterionic.

5. Particles according to claim 1, wherein said particles are monodisperse.

6. Particles according to claim 1, wherein said coating comprises a linear polymer, a branched polymer, an alternating co-polymer, and /or a block co-polymer.

7. Particles according to claim 6, wherein said polymers and/or co-polymers are selected from the group consisting of poly ethylene glycol, poly propylene glycol, poly vinyl alcohol, and/or poly ethylene imine.

8. Particles according to claim 6, wherein said polymers and/or co-polymers contains one or several of the functional groups selected from the group consisting of ethers, esters, phosphate groups, phosphonic acids, primary amines, secondary amines, tertiary amines, quarternary amines, epoxides, carboxylic acids, sulphonic acids, and hydroxyl groups.

9. Particles according to claim 1, wherein said coating is composed of small molecules comprising one ore several of the functionalities selected from the group consisting of esters, ethers, primary amines, secondary amines, tertiary amines, quartenary amines, epoxides, sulphates, sulphonic acids, carboxylic acids, hydroxyl groups, phosphate groups, phosphonic acids, and/or amides.

10. Particles according to claim 1, wherein said coating is composed of one or several of the group consisting of proteins, DNA, RNA, cellulose, starch, regenerated cellulose, modified starch, and/or modified cellulose.

11. Method for the manufacture of particles according to claims 1, wherein said core is a polymer, comprising a core forming and a coating forming step, wherein the core forming step comprises precipitation polymerization or emulsion polymerisation, and the coating forming step comprises binding another polymer covalently to said core, whereby said particles are of a size in the interval of 20 nm to 10 µm, wherein said core is hydrophobic when the coating is hydrophilic, and said core is hydrophilic when said coating is hydrophobic.

12. Use of the particles in any of claim 1 to 10, to perform a chromatographic separation of at least one analyte from other sample components and detect at least one analyte, wherein said detection is achieved with a mass analyzer with an angled ionization source.

## Claims (Claims for the following Contracting State(s): DE, FR, GB, IT)

1. Particles for use in a mobile solid phase in chromatographic separation and detection with the lass analyzer of sample components, wherein said particles comprise a polymeric core and a coating, **ch aracterized in that**
said particles is of a size in the interval of 20 nm to 10 µm, wherein said polymeric core is hydrophobic when the coating is hydrophilic, and said polymeric core is hydrophilic when said coating is hydrophobic, and that said coating is covalently bonded to said core, said polymeric core comprises at least one polymer which is polymerized from one or several of the monomers selected from the group of methacrylate, vinylpyridine, acrylate, styrene, and divinyl benzene, such that said polymeric core is suitable for interaction with at least one analyte and said coating is suitable for essentially preventing flocculation or aggregation; and
provided that said coating does not comprise phosphorylcholine groups.

2. Particles according to claim 1, wherein said core comprises a crosslinked polymer.

3. Particles according to claim 1, wherein said particles are charged.

4. Particles according to claim 1, wherein said particles are zwitterionic.

5. Particles according to claim 1, wherein said particles are monodisperse.

6. Particles according to claim 1, wherein said coating comprises a linear polymer, a branched polymer, an alternating co-polymer, and /or a block co-polymer.

7. Particles according to claim 6, wherein said polymers and/or co-polymers are selected from the group consisting of poly ethylene glycol, poly propylene glycol, poly vinyl alcohol, and/or poly ethylene imine.

8. Particles according to claim 6, wherein said polymers and/or co-polymers contains one or several of the functional groups selected from the group consisting of ethers, esters, phosphate groups, phosphonic acids, primary amines, secondary amines, tertiary amines, quarternary amines, epoxides, carboxylic acids, sulphonic acids, and hydroxyl groups.

9. Particles according to claim 1, wherein said coating is composed of small molecules comprising one ore several of the functionalities selected from the group consisting of esters, ethers, primary amines, secondary amines, tertiary amines, quartenary amines, epoxides, sulphates, sulphonic acids, carboxylic acids, hydroxyl groups, phosphate groups, phosphonic acids, and/or amides.

10. Particles according to claim 1, wherein said coating is composed of one or several of the group consisting of proteins, DNA, RNA, cellulose, starch, regenerated cellulose, modified starch, and/or modified cellulose.

11. Method for the manufacture of particles according to claim 1, wherein said core is a polymer, comprising a core forming and a coating forming step, wherein the core forming step comprises precipitation polymerization or emulsion polymerization, and the coating forming step comprises binding another polymer covalently to said core, whereby said particles are of a size in the interval of 20 nm to 10 µm, wherein said core is hydrophobic when the coating is hydrophilic, and said core is hydrophilic when said coating is hydrophobic.

12. Use of the particles in any of claim 1 to 10, to perform a chromatographic separation of at least one analyte from other sample components and detect at least one analyte, wherein said detection is achieved with a mass analyzer with an angled ionization source.

## Patentansprüche (Patentansprüche für folgende(n) Vertragsstaat(en): AT, BE, BG, CH, CY, CZ, DK, EE, ES, FI, GR, HU, IE, IS, LI, LT, LU, LV, MC, NL, PL, PT, RO, SE, SI, SK, TR)

1. Teilchen zur Verwendung in einer mobilen festen Phase der chromatographischen Trennung und Detektion mit einem Massenanalysator von Probenkomponenten, wobei die Teilchen einen Polymer-Kern und eine Beschichtung umfassen,
**dadurch gekennzeichnet, dass**
die Größe der Teilchen in einem Bereich von 20 nm bis 10 µm liegt, wobei der Polymer-Kern hydrophob ist, wenn die Beschichtung hydrophil ist und der Polymer-Kern hydrophil ist, wenn die Beschichtung hydrophob ist und die Beschichtung kovalent an den Kern gebunden ist, der Polymer-Kern wenigstens ein Polymer umfasst, das aus einem oder mehreren Monomeren polymerisiert ist, ausgewählt aus der Gruppe von Methacrylat, Vinylpyridin, Acrylat, Styren und Divinylbenzol, sodass der Polymer-Kern für eine Interaktion mit wenigstens einem Analyten geeignet ist und die Beschichtung dazu geeignet ist, Flockung oder Aggregation im Wesentlichen zu verhindern.

2. Teilchen nach Anspruch 1, wobei der Kern ein quervernetztes Polymer umfasst.

3. Teilchen nach Anspruch 1, wobei die Teilchen aufgeladen werden.

4. Teilchen nach Anspruch 1, wobei die Teilchen zwitterionisch sind.

5. Teilchen nach Anspruch 1, wobei die Teilchen monodispers sind.

6. Teilchen nach Anspruch 1, wobei die Beschichtung ein lineares Polymer, ein verzweigtes Polymer und ein alternierendes Co-Polymer und/oder ein Block-Co-Polymer umfasst.

7. Teilchen nach Anspruch 6, wobei die Polymere und/oder Co-Polymere aus der Gruppe ausgewählt sind, die aus Polyethylenglycol, Polypropylenglycol, Polyvinylalkohol und/oder Polyethylenimine besteht.

8. Teilchen nach Anspruch 6, wobei die Polymere und/oder Co-Polymere eine oder mehrere der funktionellen Gruppen umfassen, ausgewählt aus der Gruppe bestehend aus Ether, Ester, Phosphatgruppen, Phosphonsäuren, primären Aminen, sekundären Aminen, tertiären Aminen, quaternären Aminen, Epoxiden, Carbonsäuren, Sulfonsäuren und Hydroxylgruppen.

9. Teilchen nach Anspruch 1, wobei die Beschichtung aus kleinen Molekülen besteht, die eine oder mehrere der Funktionalitäten umfassen, ausgewählt aus der Gruppe bestehend aus Ester, Ether, primären Aminen, sekundären Aminen, tertiären Aminen, quaternären Aminen, Epoxiden, Sulfaten, Sulfonsäuren, Carbonsäuren, Hydroxylgruppen, Phosphatgruppen, Phosphonsäuren und/oder Aminen.

10. Teilchen nach Anspruch 1, wobei die Beschichtung aus einer oder mehreren der Gruppen zusammengesetzt ist, die aus Proteinen, DNA, RNA, Zellulose, Stärke, regenerierter Zellulose, modifizierte Stärke und/oder modifizierte Zellulose bestehen.

11. Verfahren zur Herstellung von Teilchen nach Anspruch 1, wobei der Kern ein Polymer ist, umfassend einen Schritt zur Kernbildung und einen Schritt zur Beschichtungsbildung, wobei der kernbildende Schritt eine Fällungspolymerisation oder Emulsionspolymerisation umfasst und der beschichtungsbildende Schritt eine kovalente Bindung eines weiteren Polymers an den Kern umfasst, wobei die Größe der Teilchen in einem Bereich von 20 nm bis 10 µm liegt, wobei der Kern hydrophob ist, wenn die Beschichtung hydrophil ist und der Kern hydrophil ist, wenn die Beschichtung hydrophob ist.

12. Verwendung der Partikel in einem der Ansprüche 1 bis 10, zur Durchführung einer chromatographischen Trennung mindestens eines Analyts von anderen Probenkomponenten und zur Detektion wenigstens eines Analyts, wobei die Detektion mit einem Massenanalysator mit einer gewinkelten Ionisationsquelle erreicht wird.

## Patentansprüche (Patentansprüche für folgende(n) Vertragsstaat(en): DE, FR, GB, IT)

1. Teilchen zur Verwendung in einer mobilen festen Phase der chromatographischen Trennung und Detektion mit einem Massenanalysator von Probenkomponenten, wobei die Teilchen einen Polymer-Kern und eine Beschichtung umfassen,
**dadurch gekennzeichnet, dass**
die Größe der Teilchen in einem Bereich von 20 nm bis 10 µm liegt, wobei der Polymer-Kern hydrophob ist, wenn die Beschichtung hydrophil ist und der Polymer-Kern hydrophil ist, wenn die Beschichtung hydrophob ist und die Beschichtung kovalent an den Kern gebunden ist, der Polymer-Kern wenigstens ein Polymer umfasst, das aus einem oder mehreren Monomeren polymerisiert ist, ausgewählt aus der Gruppe von Methacrylat, Vinylpyridin, Acrylat, Styren und Divinylbenzol, sodass der Polymer-Kern für eine Interaktion mit wenigstens einem Analyten geeignet ist und die Beschichtung dazu geeignet ist, Flockung oder Aggregation im Wesentlichen zu verhindern und
unter der Voraussetzung, dass die Beschichtung nicht phosphorylcholin-Gruppen umfasst.

2. Teilchen nach Anspruch 1, wobei der Kern ein quervernetztes Polymer umfasst.

3. Teilchen nach Anspruch 1, wobei die Teilchen aufgeladen werden.

4. Teilchen nach Anspruch 1, wobei die Teilchen zwitterionisch sind.

5. Teilchen nach Anspruch 1, wobei die Teilchen monodispers sind.

6. Teilchen nach Anspruch 1, wobei die Beschichtung ein lineares Polymer, ein verzweigtes Polymer und ein alternierendes Co-Polymer und/oder ein Block-Co-Polymer umfasst.

7. Teilchen nach Anspruch 6, wobei die Polymere und/oder Co-Polymere aus der Gruppe ausgewählt sind, die aus Polyethylenglycol, Polypropylenglycol, Polyvinylalkohol und/oder Polyethylenimine besteht.

8. Teilchen nach Anspruch 6, wobei die Polymere und/oder Co-Polymere eine oder mehrere der funktionellen Gruppen umfassen, ausgewählt aus der Gruppe bestehend aus Ether, Ester, Phosphatgruppen, Phosphonsäuren, primären Aminen, sekundären Aminen, tertiären Aminen, quaternären Aminen, Epoxiden, Carbonsäuren, Sulfonsäuren und Hydroxylgruppen.

9. Teilchen nach Anspruch 1, wobei die Beschichtung aus kleinen Molekülen besteht, die eine oder mehrere der Funktionalitäten umfassen, ausgewählt aus der Gruppe bestehend aus Ester, Ether, primären Aminen, sekundären Aminen, tertiären Aminen, quaternären Aminen, Epoxiden, Sulfaten, Sulfonsäuren, Carbonsäuren, Hydroxylgruppen, Phosphatgruppen, Phosphonsäuren und/oder Aminen.

10. Teilchen nach Anspruch 1, wobei die Beschichtung aus einer oder mehreren der Gruppen zusammengesetzt ist, die aus Proteinen, DNA, RNA, Zellulose, Stärke, regenerierter Zellulose, modifizierte Stärke und/oder modifizierte Zellulose bestehen.

11. Verfahren zur Herstellung von Teilchen nach Anspruch 1, wobei der Kern ein Polymer ist, umfassend einen Schritt zur Kernbildung und einen Schritt zur Beschichtungsbildung, wobei der kernbildende Schritt eine Fällungspolymerisation oder Emulsionspolymerisation umfasst und der beschichtungsbildende Schritt eine kovalente Bindung eines weiteren Polymers an den Kern umfasst, wobei die Größe der Teilchen in einem Bereich von 20 nm bis 10 µm liegt, wobei der Kern hydrophob ist, wenn die Beschichtung hydrophil ist und der Kern hydrophil ist, wenn die Beschichtung hydrophob ist.

12. Verwendung der Partikel in einem der Ansprüche 1 bis 10, zur Durchführung einer chromatographischen Trennung mindestens eines Analyts von anderen Probenkomponenten und zur Detektion wenigstens eines Analyts, wobei die Detektion mit einem Massenanalysator mit einer gewinkelten Ionisationsquelle erreicht wird.

## Revendications (Revendications pour l'(les) Etat(s) contractant(s) suivant(s): AT, BE, BG, CH, CY, CZ, DK, EE, ES, FI, GR, HU, IE, IS, LI, LT, LU, LV, MC, NL, PL, PT, RO, SE, SI, SK, TR)

1. Particules pour une utilisation dans une phase solide mobile d'une séparation chromatographique et d'une détection avec un analyseur de masse des composants d'un échantillon, dans lesquelles lesdites particules comprennent un noyau polymère et un revêtement, **caractérisées en ce que**
lesdites particules possèdent une taille comprise dans la plage allant de 20 nm à 10 µm, dans lesquelles ledit noyau polymère est hydrophobe lorsque le revêtement est hydrophile, et ledit noyau polymère est hydrophile lorsque ledit revêtement est hydrophobe, et **en ce que** ledit revêtement est attaché de manière covalente audit noyau, ledit noyau polymère comprend au moins un polymère qui est polymérisé à partir d'un ou de plusieurs monomères choisis dans le groupe constitué par le méthacrylate, la vinylpyridine, l'acrylate, le styrène et le divinylbenzène, de sorte que ledit noyau polymère soit approprié pour une interaction avec au moins un analyte et ledit revêtement soit essentiellement approprié pour la prévention de la floculation ou de l'agrégation.

2. Particules selon la revendication 1, dans lesquelles ledit noyau comprend un polymère réticulé.

3. Particules selon la revendication 1, dans lesquelles lesdites particules sont chargées.

4. Particules selon la revendication 1, dans lesquelles lesdites particules sont zwittérioniques.

5. Particules selon la revendication 1, dans lesquelles lesdites particules sont monodispersées.

6. Particules selon la revendication 1, dans lesquelles ledit revêtement comprend un polymère linéaire, un polymère ramifié, un copolymère alterné et/ou un copolymère séquencé.

7. Particules selon la revendication 6, dans lesquelles lesdits polymères et/ou copolymères sont choisis dans le groupe constitué par le polyéthylène glycol, le polypropylène glycol, un alcool polyvinylique et/ou une polyéthylène imine.

8. Particules selon la revendication 6, dans lesquelles lesdits polymères et/ou copolymères comprennent un ou plusieurs groupes fonctionnels choisis dans le groupe constitué par les éthers, les esters, les groupes phosphates, les acides phosphoniques, les amines primaires, les amines secondaires, les amines tertiaires, les amines quaternaires, les époxydes, les acides carboxyliques, les acides sulfoniques et les groupes hydroxy.

9. Particules selon la revendication 1, dans lesquelles ledit revêtement se compose de petites molécules comprenant une ou plusieurs fonctionnalités choisies dans le groupe constitué par les esters, les éthers, les amines primaires, les amines secondaires, les amines tertiaires, les amines quaternaires, les époxydes, les sulfates, les acides sulfoniques, les acides carboxyliques, les acides sulfoniques, les acides carboxyliques, les groupes hydroxy, les groupes phosphates, les acides phosphoniques et/ou les amides.

10. Particules selon la revendication 1, dans lesquelles ledit revêtement se compose d'un ou de plusieurs éléments du groupe constitué par les protéines, l'ADN, l'ARN, la cellulose, l'amidon, la cellulose régénérée, l'amidon modifié et/ou la cellule modifiée.

11. Procédé de fabrication des particules selon la revendication 1, dans lequel ledit noyau est un polymère, comprenant une étape de formation du noyau et de formation du revêtement, dans lequel l'étape de formation du noyau comprend une polymérisation par précipitation ou une polymérisation en émulsion, et l'étape de formation du revêtement comprend l'attachement d'un autre polymère de manière covalente audit noyau, où lesdites particules possèdent une taille comprise dans la plage allant de 20 nm à 10 µm, dans lesquelles ledit noyau est hydrophobe lorsque le revêtement est hydrophile et ledit noyau est hydrophile lorsque ledit revêtement est hydrophobe.

12. Utilisation des particules selon l'une quelconque des revendications 1 à 10, pour réaliser une séparation chromatographique d'au moins un analyte par rapport aux autres composants d'un échantillon et détecter au moins un analyte, dans laquelle ladite détection est réalisée avec un analyseur de masse comprenant une source d'ionisation angulaire.

## Revendications (Revendications pour l'(les) Etat(s) contractant(s) suivant(s): DE, FR, GB, IT)

1. Particules pour une utilisation dans une phase solide mobile d'une séparation chromatographique et d'une détection avec un analyseur de masse des composants d'un échantillon, dans lesquelles lesdites particules comprennent un noyau polymère et un revêtement, **caractérisées en ce que**
lesdites particules possèdent une taille comprise dans la plage allant de 20 nm à 10 µm, dans lesquelles ledit noyau polymère est hydrophobe lorsque le revêtement est hydrophile, et ledit noyau polymère est hydrophile lorsque ledit revêtement est hydrophobe, et **en ce que** ledit revêtement est attaché de manière covalente audit noyau, ledit noyau polymère comprend au moins un polymère qui est polymérisé à partir d'un ou de plusieurs monomères choisis dans le groupe constitué par le méthacrylate, la vinylpyridine, l'acrylate, le styrène et le divinylbenzène, de sorte que ledit noyau polymère soit approprié pour une interaction avec au moins un analyte et ledit revêtement soit essentiellement approprié pour la prévention de la floculation ou de l'agrégation ; et
à condition que ledit revêtement ne comprenne pas de groupes phosphorylcholine.

2. Particules selon la revendication 1, dans lesquelles ledit noyau comprend un polymère réticulé.

3. Particules selon la revendication 1, dans lesquelles lesdites particules sont chargées.

4. Particules selon la revendication 1, dans lesquelles lesdites particules sont zwittérioniques.

5. Particules selon la revendication 1, dans lesquelles lesdites particules sont monodispersées.

6. Particules selon la revendication 1, dans lesquelles ledit revêtement comprend un polymère linéaire, un polymère ramifié, un copolymère alterné et/ou un copolymère séquencé.

7. Particules selon la revendication 6, dans lesquelles lesdits polymères et/ou copolymères sont choisis dans le groupe constitué par le polyéthylène glycol, le polypropylène glycol, un alcool polyvinylique et/ou une polyéthylène imine.

8. Particules selon la revendication 6, dans lesquelles lesdits polymères et/ou copolymères comprennent un ou plusieurs groupes fonctionnels choisis dans le groupe constitué par les éthers, les esters, les groupes phosphates, les acides phosphoniques, les amines primaires, les amines secondaires, les amines tertiaires, les amines quaternaires, les époxydes, les acides carboxyliques, les acides sulfoniques et les groupes hydroxy.

9. Particules selon la revendication 1, dans lesquelles ledit revêtement se compose de petites molécules comprenant une ou plusieurs fonctionnalités choisies dans le groupe constitué par les esters, les éthers, les amines primaires, les amines secondaires, les amines tertiaires, les amines quaternaires, les époxydes, les sulfates, les acides sulfoniques, les acides carboxyliques, les acides sulfoniques, les acides carboxyliques, les groupes hydroxy, les groupes phosphates, les acides phosphoniques et/ou les amides.

10. Particules selon la revendication 1, dans lesquelles ledit revêtement se compose d'un ou de plusieurs éléments du groupe constitué par les protéines, l'ADN, l'ARN, la cellulose, l'amidon, la cellulose régénérée, l'amidon modifié
et/ou la cellule modifiée.

11. Procédé de fabrication des particules selon la revendication 1, dans lequel ledit noyau est un polymère, comprenant une étape de formation du noyau et de formation du revêtement, dans lequel l'étape de formation du noyau comprend une polymérisation par précipitation ou une polymérisation en émulsion, et l'étape de formation du revêtement comprend l'attachement d'un autre polymère de manière covalente audit noyau, où lesdites particules possèdent une taille comprise dans la plage allant de 20 nm à 10 µm, dans lesquelles ledit noyau est hydrophobe lorsque le revêtement est hydrophile et ledit noyau est hydrophile lorsque ledit revêtement est hydrophobe.

12. Utilisation des particules selon l'une quelconque des revendications 1 à 10, pour réaliser une séparation chromatographique d'au moins un analyte par rapport aux autres composants d'un échantillon et détecter au moins un analyte, dans laquelle ladite détection est réalisée avec un analyseur de masse comprenant une source d'ionisation angulaire.
